## Europäisches Patentamt
## European Patent Office
## Office européen des brevets

(19)

(11) Numéro de publication: **0 016 682**
**B1**

(12)

# FASCICULE DE BREVET EUROPEEN

(45) Date de publication du fascicule du brevet:
14.07.82

(51) Int. Cl.³: **F 16 D 69/00,** F 16 D 65/12

(21) Numéro de dépôt: **80400307.7**

(22) Date de dépôt: **07.03.80**

(54) Garniture de frein à disque et procédé pour sa fabrication.

(30) Priorité: **19.03.79 FR 7906898**

(43) Date de publication de la demande:
**01.10.80 Bulletin 80/20**

(45) Mention de la délivrance du brevet:
**14.07.82 Bulletin 82/28**

(84) Etats contractants désignés:
**DE GB IT**

(56) Documents cités:
**FR-A-1 340 988**
**US-A-2 791 299**
**US-A-3 034 625**
**US-A-3 275 105**

(73) Titulaire: **ABEX PAGID EQUIPEMENT S.A. Société anonyme dite:, 9, rue Klock, F-92112 Clichy (FR)**

(72) Inventeur: **Fusillier, Jean-Claude E., 81, Avenue de Paris, F-95620 Parmain (FR)**

(74) Mandataire: **Moulines, Pierre et al, Cabinet BEAU de LOMENIE 55, rue d'Amsterdam, F-75008 Paris (FR)**

Garniture de frein à disque et procédé pour sa fabrication

La présente invention a pour objet une garniture de frein à disque comportant un support métallique avec des zones en matière organique de protection contre la corrosion.

Dans le procédé suivant le brevet FR-A n° 2 406 128 pour la fabrication de garnitures de freins à disques comportant un organe de support sur lequel est fixée une garniture de friction, on dispose une préforme en matière organique du support et une préforme de garniture de friction dans un moule et on les soumet à une opération de pressage à chaud.

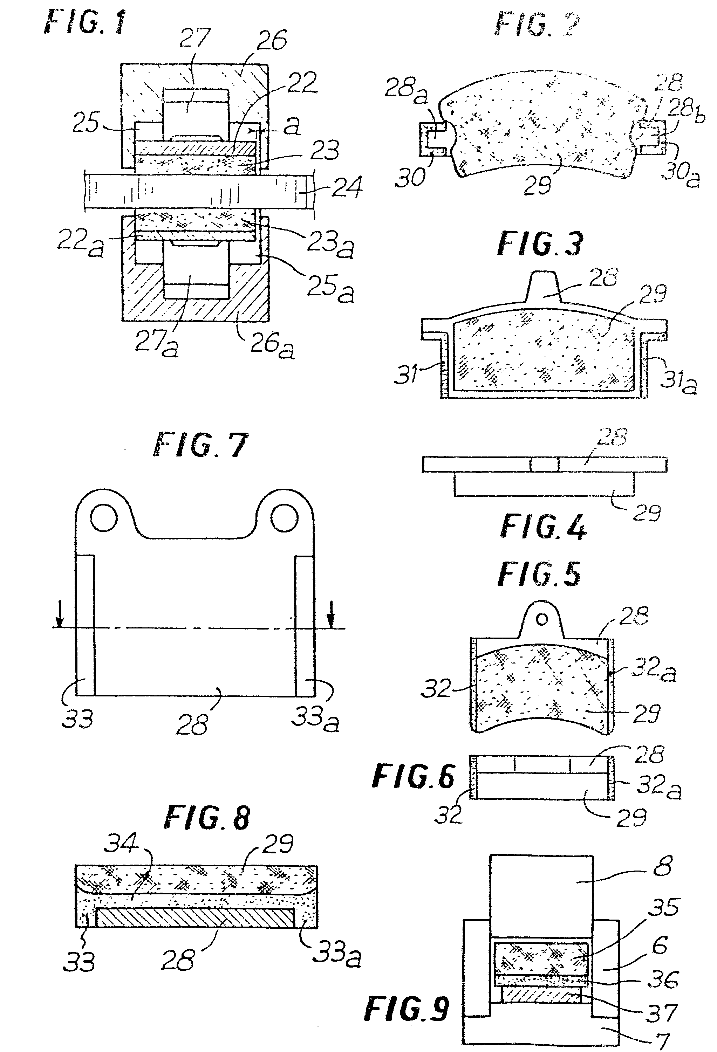

Dans ce mode de réalisation une armature en matière organique remplace l'armature en acier communément utilisée, ce qui a pour avantage de supprimer la corrosion. En effet, les plaquettes de freins comportent actuellement une armature en acier qui est recouverte d'une couche de peinture. Or ces armatures métalliques 22, 22a qui portent des garnitures de friction 23, 23a (figure 1) entre lesquelles est disposé le disque de freinage 24, sont montées avec un jeu réduit a dans des logements 25, 25a dans lesquels sont montés des pistons 27, 27a de commande des plaquettes. Le déplacement pendant le freinage des armatures métalliques 22, 22a par rapport aux étriers de frein 26, 26a est très faible. Or la durée de vie de la peinture de protection du support métallique est faible, du fait que la plaquette se trouve exposée aux intempéries (notamment passage dans les flaques d'eau ou ambiance saline) et qu'elle subit des chocs thermiques consécutifs à l'échauffement pendant le freinage.

Après la disparition de la couche protectrice, il se produit en général une corrosion du support métallique, corrosion qui favorise le collage du support métallique avec l'étrier de frein et qui perturbe le bon coulissement de la plaquette dans le logement de l'étrier. Dans certains cas, le phénomène de corrosion est tel qu'il provoque la solidarisation totale de la plaquette et de l'étrier, empêchant tout coulissement.

Le fait d'utiliser une armature en matière organique qui elle est insensible à la corrosion, supprime tous les inconvénients mentionnés ci-dessus. Cependant il est difficile dans certains cas de remplacer purement et simplement le support métallique par un support en matière organique, la répartition des efforts n'étant pas la même dans tous les types de freins. En effet, l'armature organique présentant une résistance mécanique inférieure à l'acier, il est nécessaire que certaines zones de la plaquette, particulièrement les zones de poussée du piston, résistent aux efforts de poussée.

Conformément à l'invention, la garniture de frein à disque, comportant un organe métallique de support de la garniture de friction ayant des zones de coulissement protégées contre la corrosion est caractérisée en ce que cette protection est constituée par des éléments en matière organique, fixés sur l'organe de support.

Cette disposition permet d'utiliser un organe de support métallique résistant bien aux efforts de poussée du piston de commande et d'obtenir des zones de coulissement de la plaquette de support qui ne risquent pas la corrosion.

D'autres caractéristiques et avantages de l'invention seront mieux compris à la lecture de la description qui va suivre de plusieurs modes de réalisation et en se référant aux dessins annexés, dans lesquels:

— la figure 1 est une vue en plan d'un dispositif de freinage à disque de type connu;
— la figure 2 est une vue en élévation d'un mode de réalisation d'une garniture de frein perfectionnée suivant l'invention;
— la figure 3 est une vue en élévation d'un autre mode de réalisation d'une garniture de frein avec à chaque extrémité deux faces comportant un élément de glissement en matière organique;
— la figure 4 est une vue en plan de la garniture représentée à la figure 3;
— la figure 5 est une vue en élévation d'une garniture dans laquelle les bords de la garniture de freinage et la plaquette de support comportent des éléments latéraux en matière organique;
— la figure 6 est une vue en plan de la garniture représentée à la figure 5;
— la figure 7 est une vue en élévation et de la face arrière d'une garniture de frein dont la plaquette de support est munie de deux éléments latéraux en matière organique;
— la figure 8 est une vue en plan de la garniture représentée à la figure 7;
— la figure 9 est un moule dans lequel sont disposés les éléments constituant une garniture de frein.

A la figure 2, on a représenté un mode de réalisation d'une garniture de frein à disque perfectionnée suivant l'invention et qui est constituée d'un organe de support métallique 28 sur lequel est fixée une garniture de friction 29.

Conformément à l'invention, les extrémités 28a, 28b qui coulissent, dans les logements 25, 25a des étriers sont pourvues d'éléments 30, 30a en matière organique présentant en section la forme d'un U.

Dans le mode de réalisation des figures 3 et 4, les éléments en matière organique 31, 31a solidaires des extrémités de l'organe de support métallique 28 s'étendent suivant deux plans perpendiculaires.

Aux figures 5 et 6, on a représenté une variante de réalisation d'une garniture de freinage dans laquelle les éléments de matière organique 32, 32a s'étendent à la fois sur les bords latéraux de l'organe de support métallique 28 et de la garniture de friction 29.

Aux figures 7 et 8, on a représenté une autre variante de réalisation d'une garniture de freinage dans laquelle les éléments en matière organique s'étendent en 33, 33a sur les deux bords latéraux de l'organe de support métallique, qui sont en contact avec les faces des logements 25, 25a des étriers, une couche de matière organique 34 étant disposée entre la garniture de friction et l'organe de support métallique.

Le procédé utilisé pour la réalisation d'une garniture de frein est analogue à celui du brevet FR-A n° 2 406 128 dans lequel un moule 6 présentant un fond 7 et muni d'un piston coulissant 8 reçoit intérieurement une préforme de garniture de friction 35 et une préforme de matière organique 36 qui sont disposées au-dessus d'un organe de support métallique 37.

On réalise le préformage à froid d'une pastille 36 de matériau organique destinée à constituer les zones de coulissement avec l'étrier. On procède dans le moule 6 et avec le piston 8 à un surmoulage à chaud des pastilles 35 et 36 sur l'organe de support métallique 37.

Bien entendu, diverses modifications peuvent être apportées par l'homme de l'art aux dispositifs ou procédés qui viennent d'être décrits uniquement à titre d'exemples non limitatifs, sans sortir du cadre de l'invention.

## Revendications

1. Garniture de frein à disque, comportant un organe métallique de support (28) de la garniture de friction (29) ayant des zones de coulissement protégées contre la corrosion, caractérisée en ce que cette protection est constituée par des éléments en matière organique (30, 30a, 31, 31a, 32, 32a, 33, 33a) fixés sur l'organe de support (28).

2. Garniture de frein suivant la revendication 1, caractérisée en ce que les éléments (30, 30a et 31, 31a) en matière organique sont prévus aux deux extrémités de l'organe de support (28) qui coulissent dans des logements prévus dans des étriers du frein.

3. Garniture de frein suivant les revendications 1 et 2, caractérisée en ce que les éléments (30, 30a) en matière organique prévus aux extrémités de l'organe de support (28) affectent en section la forme d'un U.

4. Garniture de frein suivant les revendications 1 et 2, caractérisée en ce que les éléments (31, 31a) en matière organique prévus aux extrémités de l'organe de support (28) sont disposés suivant deux plans perpendiculaires.

5. Garniture de frein suivant les revendications 1 et 2, caractérisée en ce que les éléments (32, 32a) en matière organique s'étendent sur les bords latéraux de l'organe de support (28) et de l'organe de friction (29).

6. Garniture de frein suivant les revendications 1 et 2, caractérisée en ce que les éléments en matière organique (33, 33a) s'étendent sur les deux bords latéraux de l'organe de support (28) qui sont en contact avec les faces des logements (25, 25a) prévus dans les étriers de frein (26, 26a), et une couche de matière organique (34) est disposée entre la garniture de friction (29) et l'organe de support métallique (28).

7. Procédé de fabrication des garnitures de frein suivant l'une quelconque des revendications 1 à 6, caractérisé en ce qu'une préforme en matière organique (36) et une préforme de garniture de friction (35) sont disposées au-dessus d'un organe de support métallique (37) dans un moule (6, 7) et sont soumises simultanément à une opération de pressage à chaud.

## Patentansprüche

1. Scheibenbremsbelag mit einem metallischen Tragorgan (28) für den Reibbelag (29) und mit korrosionsgeschützten Gleitzonen, dadurch gekennzeichnet, daß der Schutz aus organischem Material gebildeten Elementen (30, 30a, 31, 31a, 32, 32a, 33, 33a) besteht, die am Tragorgan (28) befestigt sind.

2. Bremsbelag nach Anspruch 1, dadurch gekennzeichnet, daß die Reibelemente (30, 30a und 31, 31a) aus organischem Material an den beiden Enden des Tragorgans (28) vorgesehen sind, die in in den Bremssätteln der Bremse vorgesehenen Sitzen gleiten.

3. Bremsbelag nach Anspruch 1 und 2, dadurch gekennzeichnet, daß die an den Enden des Tragorgans (28) vorgesehenen Elemente (30, 30a) aus organischem Material im Querschnitt U-förmig sind.

4. Bremsbelag nach Anspruch 1 und 2, dadurch gekennzeichnet, daß die an den Enden des Tragorgans (28) vorgesehenen Elemente (31, 31a) aus organischem Material in zwei zueinander senkrechten Ebenen angeordnet sind.

5. Bremsbelag nach Anspruch 1 und 2, dadurch gekennzeichnet, daß die Elemente (32, 32a) aus organischem Material sich an den seitlichen Rändern des Tragorgans (28) und des Reiborgans (29) erstrecken.

6. Bremsbelag nach Anspruch 1 und 2, dadurch gekennzeichnet, daß die Elemente (33, 33a) aus organischem Material sich an den beiden seitlichen Rändern des Tragorgans (28) erstrecken, die mit den Sitzflächen (25, 25a) in den Bremssätteln (26, 26a) in Berührung stehen, und daß eine Schicht (34) aus organischem Material zwischen dem Reibbelag (29) und dem metallischen Tragorgan (28) vorgesehen ist.

7. Verfahren zur Herstellung der Bremsbeläge nach einem der Ansprüche 1 bis 6, dadurch gekennzeichnet, daß eine Vorform (36) aus organischem Material und eine Reibbelagvorform (35) über einem metallischen Tragorgan (37) in einer Form (6, 7) angeordnet und gleichzeitig einem Warmpreßvorgang unterworfen werden.

## Claims

1. A disc brake lining comprising a metallic member (28) supporting the friction lining (29) having sliding zones protected against corrosion, characterized in that said protection is constituted by elements in an organic material (30, 30a, 31, 31a, 32, 32a, 33, 33a) secured to the supporting member (28).

2. A disc brake lining according to claim 1, characterized in that the elements (30, 30a and 31, 31a) in an organic material are provided at both ends of the supporting member (28) which slide in recesses provided in brake lugs.

3. A brake lining according to claims 1 and 2, characterized in that the elements (30, 30a) in an organic material provided at the ends of the support member (28) are U-shaped in cross-section.

4. A brake lining according to claims 1 and 2, characterized in that the elements in an organic material provided at the ends of the supporting member (28) are disposed according to two perpendicular planes.

5. A brake lining according to claims 1 and 2, characterized in that the elements (32, 32a) in an organic material extend over the side edges of the supporting member (28) and of the friction member (29).

6. A brake lining according to claims 1 and 2, characterized in that the elements in an organic material (33, 33a) extend over the two side edges of the supporting member (28) which are in contact with the faces of the recesses (25, 25a) provided in the brake lugs (26, 26a) and an organic material layer (34) is interposed between the friction lining (29) and the metallic support member (28).

7. Process for the manufacture of brake linings according to any one of claims 1 to 6, characterized in that a preform in an organic material (36) and a friction lining preform (35) are disposed above a metallic support member (37) in a mold (6, 7) and are subjected simultaneously to a hot pressing operation.

FIG. 1

FIG. 2

FIG. 3

FIG. 4

FIG. 5

FIG. 6

FIG. 7

FIG. 8

FIG. 9